# EUROPÄISCHE PATENTSCHRIFT

(11) **EP 0 746 503 B1**
(45) Veröffentlichungstag und Bekanntmachung des Hinweises auf die Patenterteilung: **06.05.1998**
(21) Anmeldenummer: 95943165.1
(22) Anmeldetag: 18.12.1995
(51) Int. Cl.: B65D 1/40

(54) **FLASCHENARTIGER KUNSTSTOFFBEHÄLTER**
BOTTLE-SHAPED PLASTIC CONTAINER
RECIPIENT EN PLASTIQUE EN FORME DE BOUTEILLE

(30) Priorität: 21.12.1994 DE 4445398; 30.03.1995 DE 19511611
(43) Veröffentlichungstag der Anmeldung: 11.12.1996
(73) Patentinhaber: Wella Aktiengesellschaft, 64274 Darmstadt (DE)
(72) Erfinder: KOHN, Udo, D-64289 Darmstadt (DE); STEIGERWALD, Franz, D-64347 Griesheim (DE)
(86) Internationale Anmeldenummer: EP9505009
(87) Internationale Veröffentlichungsnummer: WO9619384

(56) Entgegenhaltungen:
- US-A- 3 221 954
- US-A- 3 721 360
- US-A- 4 454 945

## Beschreibung

Die Erfindung betrifft einen flaschenartigen Kunststoffbehälter nach dem Oberbegriff des Anspruchs 1.

Derartige Behälter sind bekannt für flüssige Produkte, die vom Verbraucher durch Knautschen des Behälters in dosierten Mengen entnehmbar sind. Diese bestehen aus kompakten Kunststoff, vorzugsweise aus Polyolefinen mit einer Dichte um 0,9 bis 0,97 g/cm³. Im Zuge des Bestrebens zur Reduzierung des Materialaufwandes bei Verpackungen wurde versucht, die Wandstärken zu reduzieren. Die Reduzierung des Materialaufwandes für eine Verpackung ist heute eine ökologische Zielvorgabe. Geringerer Materialeinsatz trägt zu einer günstigeren Ökobilanz der Verpackung und des Produkts bei. Verpackungen müssen wiederverwertet werden. Die Kosten der Wiederverwertung werden nach dem Einsatzgewicht der Verpackung errechnet. Die Wiederverwertungskosten von Kunststoffverpackungen sind besonders hoch.

Diese Kosten sind zum Beispiel in Deutschland höher als der eigentliche Materialpreis. Dem Bestreben nach Verringerung des Materialeinsatzes im Falle der Behälter nach dem Stand der Technik sind aber bisher Grenzen gesetzt gewesen. Beispielsweise konnte eine 250-ml-Flasche durch Optimierungsarbeiten auf ein unteres Grenzgewicht (Materialeinsatzgewicht) von 20 g Polypropylen entwickelt werden. Die Wandstärke an der Mantelfläche dieser Flasche weist dann eine Dicke von ca. 0,7 mm auf. Es wurde versucht, das Einsatzgewicht noch weiter, auf 15 g Polypropylen, zu reduzieren. Hierdurch ergab sich eine Wandstärke an der Mantelfläche von ca. 0,5 mm. Bei dieser Dimensionierung und bei weiteren vergleichbaren Beispielen der Wandstärkenreduzierung wurde festgestellt, daß bei der Benutzung der Flaschen beim Ausbringen des Produktes durch Knautschen ein Knickeffekt an der instabilen Mantelfläche entsteht, der das Ausbring- und Rückstellvermögen der Flasche nachteilig durch ein träges Pumpverhalten verändert und nach kurzer Zeit zu einem unästhetischen Aussehen der Flasche führt, welches sich auch in der qualitativen Anmutung des Produkts sehr nachteilig auswirkt.

Auch sind im Extrusionsblasverfahren geschäumte Kunststoffbehälter (Flaschen) bekannt (US-A-3,221,954 und US-A-3,721,360). Diese haben jedoch große Ausgießöffnungen, so daß die relativ dicke Mantelwandung für keine besondere Entnahmefunktion wie das Verformen und Rückstellen in den Ausgangszustand (Knautschen) zum Dosieren vorgesehen ist.

Es ist daher Aufgabe der Erfindung, einen Behälter nach der Gattung des Oberbegriffs des Anspruchs 1 zu schaffen, der trotz einer weiteren Materialeinsatzminimierung eine hohe beziehungsweise gleiche Stabilität ohne Knickeffekt beim Knautschen der Mantelwandung zum Dosieren aufweist.

Gelöst wird diese Aufgabe nach dem kennzeichnenden Teil des Anspruchs 1. Weitere vorteilhafte Ausgestaltungen/Weiterbildungen der Erfindung gehen aus den entsprechenden Unteransprüchen hervor.

Durch die Erfindung stehen nunmehr flaschenartige Behälter für flüssige Produkte zur Verfügung, die bei gleicher Qualitätsanmutung und Gebrauchseignung wie herkömmliche Flaschen aus kompaktem Kunststoffmaterial höheren Einsatzgewichts bis zu 30 % weniger Materialeinsatz ermöglichen. Dieser um bis zu 30 % reduzierte Materialeinsatz -bei gleicher Wandstärke wie herkömmliche materialminimierte Behälter- ist bedingt durch die im Kunststoff eingebetteten, feinstverteilten Schaumbläschen. Ein noch größerer Schaumbläschenanteil hätte durch eine entsprechende Materialverdünnung eine geringere Stabilität und einen Knick-/ Bruch- oder Einbeuleffekt zur Folge. Die Oberfläche der Behälterwand kann auch glatt beschaffen sein, also ohne die sogenannte Orangenhautoberfläche, was zum Beispiel bei einem Extrusionsblasverfahren mit folgenden optimierten Parametern erreichbar ist: Temperatur des Schlauch-Vorformlings, Art, Korngröße und prozentualer Anteil des chemischen Treibmittels und Höhe des Blasdrucks. Außerdem haftet ein Etikett besser an einer relativ glatten Wandoberfläche. Der im Materialeinsatz reduzierte flaschenartige Verpackungsbehälter -vorzugsweise im Extrusionsblasverfahren hergestellt- ist mit einer verschließbaren Mündung versehen, wobei die Behälterwandung für das Ausbringen des Inhalts durch die Mündungsöffnung durch Knautschen mit der Hand verformbar ist. Die Behälterwandung besteht vollständig oder größtenteils aus aufgeschäumtem Kunststoff, vorzugsweise aus aufgeschäumten Polyolefinen (besonders gut geeignet für Flüssigkeiten) wie Polypropylen (PP),Polyethylen (PE) oder deren Copolymerisate, wobei die Dichte des geschäumten Materials bis 30 % geringer ist als die Dichte des gleichen ungeschäumten Materials. Die Wandstärke des Behälters beträgt - wie bei gattungsgleichen Verpackungsflaschen üblich - im Mantelbereich weniger als 1,5 mm, vorzugsweise 0,5 bis 1 mm. Der Behälter ist in einem Arbeitsgang im Extrusionsblasverfahren aus der Schmelze direkt hergestellt. Die Erzeugung des Schaumes erfolgt durch Zugabe eines chemischen Treibmittels wie zum Beispiel Polycarbonsäure und Carbonatverbindungen, die unter Anwendung von Extruderschnecken mit hoher Misch- und Homogenisierwirkung fein verteilte Gasbläschen in der Kunststoffschmelze bilden. Aus Handhabungs- und Stabilitätsgründen ist ein maximales Behältervolumen von 1500 ml vorgesehen.

Die Außenhaut des Behälters kann auch aus einem kompakten Material bestehen, welches maximal 20 % der Gesamtwandstärke ausmacht, wobei diese Außenhaut ein anderer Materialtyp sein kann wie das geschäumte Material. Weiterhin ist es möglich, zwischen Außenhaut und geschäumter Wand eine dünne Schicht eines Sperrmaterials wie zum Beispiel PA oder EVOH zu legen, um eine vorgesehene Barriere für bestimmte Gase oder Flüssigkeiten zu erzielen.

Nach der Erfindung ist es nunmehr möglich, gebrauchstüchtige, gattungsgleiche Verpackungsbehälter mit bis zu 30 % weniger Materialeinsatz herzustellen. Zum Beispiel ist es möglich, eine 250-ml-Flasche aus PP mit 15 g Einsatzgewicht zu realisieren. Dabei mißt die Wandung im Mantelbereich der Flasche ca. 0,7 mm, wobei das Material aus vorzugsweise Polypropylenschaum eine Dichte von ca. 0,72 g/cm³ aufweist. Bei einem anderen Beispiel ist eine 600-ml-Flasche aus PP mit einer Wandstärke von 0,9 mm vorgesehen. Die durch den Schaum rauhe Oberflächenstruktur ("Orangenhaut") der Flasche (je nach Herstellverfahren) kann mit einer kompakten, glatten Außenhaut gleichen oder ungleichen Materials überzogen werden (beispielsweise durch Coextrusion), um den ästhetischen Eindruck einer glatten Oberfläche wieder herzustellen.

Die Erfindung wird anhand von zwei Ausführungsbeispielen näher beschrieben. Es zeigt:
- Figur 1: in einer Seitenansicht einen flaschenartigen Kunststoffbehälter;
- Figur 2: eine Vergrößerung des Schnitts durch die Mantelwandung eines ersten Ausführungsbeispiels nach der Figur 1, und
- Figur 3: eine Vergrößerung wie Figur 2 eines zweiten Ausführungsbeispiels.

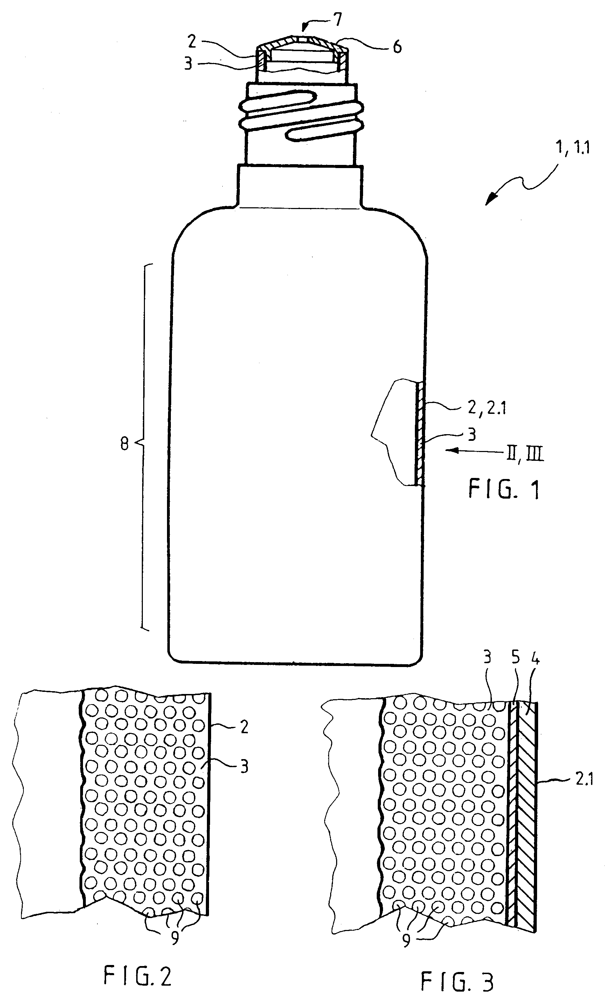

In der Figur 1 ist in einem ersten und zweiten Ausführungsbeispiel ein flaschenartiger Kunststoffbehälter 1, 1.1 mit einer knautschbaren Mantelwandung 2 dargestellt, der im wesentlichen aus geschäumtem Kunststoff besteht. Vorzugsweise ist als geschäumter Kunststoff 3 Polyolefin wie Polypropylen oder Polyethylen oder deren Copolymerisate vorgesehen. Der Kunststoff 3 weist eine um mindestens 10 % und max. 30 % geringere Dichte auf als die Dichte eines gleichen ungeschäumten Kunststoffs. Als Mantelwandung 2 ist je nach Volumen eine Wandstärke bis zu 1,5 mm vorgesehen (beispielsweise 0,7 mm bei 250 ml und 0,9 mm bei 600 ml). Zum Dosieren eines flüssigen Produkts ist ein Dosier- bzw. Spritzeinsatz 6 mit einer relativ kleinen Dosieröffnung 7 vorgesehen. Es kann aber auch auf einen separaten Einsatz 6 verzichtet werden, indem man eine entsprechend kleinere Flaschenhalsöffnung vorsieht.

In der Figur 2 ist in einer Vergrößerung ein Schnitt durch die Mantelwandung 2 dargestellt, die hier in einem ersten Ausführungsbeispiel ausschließlich aus geschäumtem Kunststoff 3 besteht, wobei unter Ziffer 9 einzelne Schaumbläschen 9 dargestellt sind.

Ein zweites Ausführungsbeispiel ist in der Figur 3 dargestellt, wobei hier die Mantelwandung 2.1 mit einer Außenhaut 4 versehen ist, die wahlweise aus einem anderen Kunststoff als der geschäumte Kunststoff 3 bestehen kann. Zwischen der Außenwand 4 und der geschäumten Mantelwandung 2.1 kann wahlweise eine Sperrschicht 5 - insbesondere gegen Gas- oder Flüssigkeitsdiffusion - vorgesehen werden, wobei die Sperrschicht 5 wahlweise aus PA oder EVOH bestehen kann.

Der Behälter 1, 1.1 ist zwecks guter Knautschfähigkeit mit einer im wesentlichen kreis-, rechteck- oder ovalförmigen Behältergrundfläche bzw. Behälterquerschnittfläche mindestens im Knautschbereich 8 versehen.

Beim Extrusions- und Blasvorgang werden der Effekt einer unkontrollierbaren Expansion des Schlauches und die daraus notwendigen Verfahrensmaßnahmen dadurch verhindert, daß das geschäumte Wandungsmaterial des Flaschenkörpers eine gegenüber dem kompakten Material mindestens 10 % und maximal 30 % verringerte Dichte hat. Nur durch den beschriebenen Dichtebereich und die sonstigen beschriebenen Merkmale wird die Einhaltung aller oben genannten erwünschten Funktionen erreicht (insbesondere der Knickeffekt vermieden). Wesentliche Abweichungen führen zur Verschlechterung der Anwendungseigenschaften wie zum Beispiel eine Verringerung der Knautschfähigkeit und zu unerwünschten Knickeffekten oder zu einer subjektiv schlechteren Produktqualität sowie zu ungünstigen Herstellbedingungen des Behälters.

## Patentansprüche

1. Flaschenartiger, materialeinsatzminimierter Kunststoffbehälter (1,1.1) mit einer formelastischen Mantelwandung (2,2.1), der im wesentlichen aus geschäumtem Kunststoff (3) besteht, wobei durch manuelles Drücken in Verbindung mit einer Dosieröffnung (7) eine Dosierfunktion eines flüssigen Produkts für eine Einhandentnahme vorgesehen ist,
**dadurch gekennzeichnet,** daß eine von 10 % bis zu 30 % geringere Dichte des geschäumten Kunststoffs (3) vorgesehen ist als die Dichte des gleichen ungeschäumten Kunststoffs, daß ein Behältervolumen von maximal 1500 ml vorgesehen ist, und daß die Mantelwandung (2, 2.1) ungefähr proportional zum Behältervolumen eine Stärke von 0,5 mm bis maximal 1,5 mm aufweist.

2. Behälter nach Anspruch 1, **dadurch gekennzeichnet,** daß als geschäumter Kunststoff (3) Polyolefin wie Polypropylen oder Polyethylen (z.B. HDPE) oder deren Copolymerisate vorgesehen sind.

3. Behälter nach mindestens Anspruch 1, **dadurch gekennzeichnet,** daß die Mantelwandung (2, 2.1) eine Stärke von ungefähr 0,7 mm aufweist bei einem Behältervolumen von 250 ml.

4. Behälter nach mindestens Anspruch 1, dadurch gekennzeichnet, daß die Mantelwandung (2,2.1) eine Stärke von ungefähr 0,9 mm aufweist bei einem Behältervolumen von 600 ml.

5. Behälter nach mindestens Anspruch 1, **dadurch gekennzeichnet,** daß die Mantelwandung (2.1) mit einer glatten Oberfläche versehen ist.

6. Behälter nach Anspruch 5, **dadurch gekennzeichnet,** daß eine Außenhaut (4) aus einem gleichen oder anderen Kunststoff besteht als der geschäumte Kunststoff (3).

7. Behälter nach mindestens Anspruch 5, **dadurch gekennzeichnet,** daß zwischen der Außenhaut (4) und der geschäumten Mantelwandung (2.1) eine Sperrschicht (5) - insbesondere gegen Gas- oder Flüssigkeitsdiffusion - vorgesehen ist.

8. Behälter nach mindestens Anspruch 5, **dadurch gekennzeichnet,** daß die Sperrschicht (5) aus Polyamid (PA) oder Ethylenvinylalkohol (EVOH) besteht.

9. Behälter nach mindestens Anspruch 1, **dadurch gekennzeichnet,** daß eine im wesentlichen kreis-, rechteck- oder ovalförmige Behältergrundfläche bzw. Behälterquerschnittfläche mindestens im Knautschbereich (8) vorgesehen ist.

## Claims

1. A bottle-like, material-saving plastics container (1, 1.1) having a dimensionally-resilient shell wall (2, 2.1) and being composed substantially of an expanded plastics material (3), wherein one-handed metered discharge of a fluid product is provided through manual pressure in conjunction with a metering opening (7), characterised in that the expanded plastics material (3) is from 10% to 30% less dense than the same non-expanded plastics material, in that a maximum container volume of 1500 ml is provided, and in that the shell wall (2, 2.1) has a thickness between 0.5 mm and a maximum of 1.5 mm, the thickness being approximately proportional to the container volume.

2. A container in accordance with Claim 1, characterised in that a polyolefin such as polypropylene or polyethylene (e.g. HDPE) or their copolymerides is used as an expanded plastics material (3).

3. A container in accordance with at least Claim 1, characterised in that with a container volume of 250 ml, the shell wall (2, 2.1) is approximately 0.7 mm thick.

4. A container in accordance with at least Claim 1, characterised in that with a container volume of 600 ml, the shell wall (2, 2.1) is approximately 0.9 mm thick.

5. A container in accordance with at least Claim 1, characterised in that the shell wall (2.1) is provided with a smooth surface.

6. A container in accordance with Claim 5, characterised in that an outer skin (4) is composed of the same plastics material as the expanded plastics material (3) or of a different plastics material.

7. A container in accordance with at least Claim 5, characterised in that a barrier layer (5) - in particular against the diffusion of gas or fluid - is provided between the outer skin (4) and the expanded shell wall (2.1).

8. A container in accordance with at least Claim 5, characterised in that the barrier layer (5) is composed of polyamide (PA) or ethylene vinyl alcohol (EVOH).

9. A container in accordance with at least Claim 1, characterised in that a substantially circular, rectangular or oval-shaped container base area or container cross-sectional area is provided at least in the deformable region (8).

## Revendications

1. Récipient (1, 1.1) en matière plastique, constitué d'un minimum de matière, du genre de bouteille, pourvu d'une paroi d'enveloppe (2, 2.1) à élasticité de forme constituée essentiellement de matière plastique alvéolaire (3), une fonction de dosage d'un produit liquide, pour permettre un prélèvement d'une seule main, étant prévue, par pressage manuel en liaison avec une ouverture de dosage (7),
caractérisé en ce qu'une masse volumique de la matière plastique (3) alvéolaire plus petite de 10 à environ 30 % que la masse volumique de la même matière plastique non alvéolaire est prévue, en ce qu'un volume maximum de récipient de 1500 ml est prévu et en ce que la paroi d'enveloppe (2,2.1) présente une épaisseur de 0,5mm à 1,5mm au maximum, à peu près proportionnelle au volume du récipient.

2. Récipient selon la revendication 1, caractérisé en ce que sont prévus, comme matière plastique alvéolaire (3), une polyoléfine, telle que le polypropylène ou le polyéthylène (par exemple, du polyéthylène haute pression HDPE) ou leurs copolymérisats.

3. Récipient selon au moins la revendication 1, caractérisé en ce que la paroi d'enveloppe (2, 2.1) a une épaisseur d'environ 0,7 mm, pour un volume de récipient de 250 ml.

4. Récipient selon au moins la revendication 1, caractérisé en ce que la paroi d'enveloppe (2, 2.1) a une épaisseur d'environ 0,9 mm, pour un volume de récipient de 600 ml.

5. Récipient selon au moins la revendication 1, caractérisé en ce que la paroi d'enveloppe est pourvue d'une surface lisse.

6. Récipient selon la revendication 5, caractérisé en ce qu'est prévue une peau extérieure (4), constituée de la même matière plastique, ou d'une matière plastique autre que la matière plastique alvéolaire (3).

7. Récipient selon au moins la revendication 5, caractérisé en ce que, entre la peau extérieure (4) et la paroi d'enveloppe (2.1) alvéolaire, est prévue une couche de barrage (5) - en particulier contre la diffusion de gaz ou de liquides.

8. Récipient selon au moins la revendication 5, caractérisé en ce que la couche de barrage (5) est constituée de polyamide (PA) ou d'alcool éthylènevinylique (EVOH).

9. Récipient selon au moins la revendication 1, caractérisé en ce qu'une surface de base de récipient, respectivement une surface transversale de récipient, sensiblement de forme circulaire, rectangulaire ou ovale, est prévue, au moins dans la zone déformable.
